# EUROPEAN PATENT APPLICATION

(11) **EP 0 743 793 A2**
(43) Date of publication of application: **20.11.1996**
(21) Application number: 96107958.9
(22) Date of filing: 20.05.1996
(51) Int. Cl.: H04N 7/30

(54) **A device for determining quantizing number in an image encoder**

(30) Priority: 19.05.1995 KR 9512568
(71) Applicant: LG ELECTRONICS INC., Seoul (KR)
(72) Inventor: Byeong, Ho Choi, Dukjin-Ku Chunju-Shi Julrabuk-Do (KR)
(74) Representative: Draudt, Axel Hermann Christian, Dipl.-Ing.

(57) **Abstract**

A device for determining quantizing number of image signal comprises a discrete cosine transformation means for transforming the image data, a segment delay means for delaying the data inputted from the diserete cosine transformation means for prescribed time, a quantization means for quantizing the data inputted from the segment delay means, a variable decoding means for decoding the quantizied data, a formatter for arranging the data inputted from the variable decoding means in a suitable form to the system, an activity calculation means for calculating activity by counting the discrete cosine transformation coefficient transformed by the discrete cosine transformation means in macro block unit, a target bit calculation means for calculating the target bit of the data in macro block unit, a code length calculation means for calculating the generated bit by quantizing and decoding variably the discrete cosine transformation coefficient of the discrete cosine transformation means, a comparison means for comparing the code length the target bit, and a quantizing number determination means for determining the outputting the quantizing number by calculating the data inputted from the comparison means.

## Description

### BACKGROUND OF THE INVENTION

The present invention relates to compression of image signal, and more particularly to a device for determining quantizing number of image signal.

In the conventional image system, when the image data, the analog signal, is inputted, this analog data is converted into the digital data by a analog/digital converter, and then the digital data is converted into the frequency dependent signal by discrete cosine transformation(DCT). The energy of the frequency dependent signal is packed in low frequency region and the transformation coefficient of the DCT is converted into reference quantity by quantizing process and then the data is compressed at first. The quantizing reference quantity is read from the low frequency region by zigzag scan, so that the data is converted into bit stream data by run-length coding and the image is compressed.

In the aforementioned image system, however, the quantization is most important factor of the scene quality and the amount of the generated bit. Thus, since the data is divided in step size by the quantizing process, the amount of the data is controlled and the scene quality is varied by the step size.

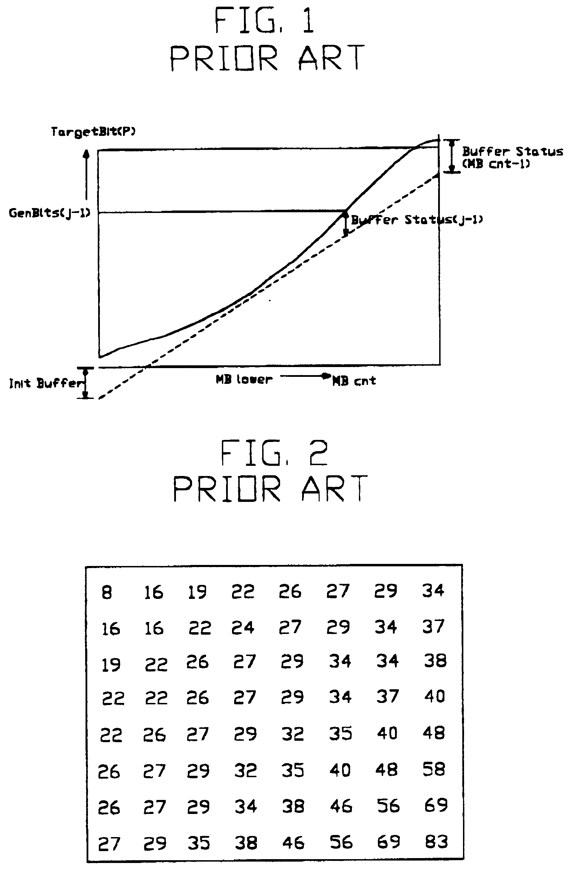

In the conventional method of controlling the amount of the bit, the fullness of a buffer is calculated in a macro block unit to maintain the scene quality in optimum state, so that the fullness of the buffer is judged. According, when the fullness of the buffer is large, the quantizing reference quantity is increased to decrease the amount of the generated bit, as shown in FIG. 1. Further, when the fullness of the buffer is small, the quantizing reference quantity is decreased to increase the amount of the generated bit. By decreasing and increasing the amount of the generated bit, therefore, the transmitting amount of the bit is controlled to prevent the emptiness of the buffer.

FIG. 2 is a view showing a quantizing matrix for block of coding type in a screen. The method used for this block of coding type is method for controlling the amount of the beat of MPEG-2. The convention algorithm is indicated as follow.

The state of the buffer is defined by equation (1).$\text{BufferStat(j) = InitBuffer + GenBits(j-1) - TargetBit per MB(j-1)}$ where, BufferStat(j) is state of the buffer, InitBuffer is the fullness of the buffer at initial state of the screen, GenBits(j-1) is number of the generated bit up to the (j-1)th macro block, and TargetBit is the target bit for the macro block.

The quantizing reference quantity is$\text{RefQuant(j) = BufferStat(j) × 31 / ReactParm}$ where, RefQuant(j) is quantizing reference quantity and ReactParam is illustrated by eq.(3)$\text{ReactParam = 2 × bit rate / Picture rate}$ Further, the activity of the macro block is$\text{Activity = 1 + min[Bi-Variance(j,k)]}$ j = 0,1,2,···,MBcnt-1
k = 1,2,3,4
where, min[Bi-Variance(j,k)] is minimum value of the (j,k)th block variance. The normal activity is satisfied follow relation.$\text{Normal Activity =} \frac{\text{[ 2×Activity(j) + Aver-Activity]}}{\text{[ Activity(j) + 2 ×Aver-Activity}}$ where, Aver-Activity is the activity average. Thus, the quantizing quantity of the macro block is obtained by multiplying eq.(2) and (5).$\text{Mquant(j) = RefQuant(i) × Normal Activity(j)}$ where, Mquant(j) is quantizing quantity of the macro block. Therefore, the generated bit can be controlled by carrying out the quantizing process according to the quatizing quantity of the jth macro block.

In the above mentioned quantizing process, however, the scene quality is deteriorated by hard conversion of the scene and the edge blurring phenomenon is generated. It is hard, thus, to adapt the conventional technic to the coding system, in which the data is packed to defined space.

### SUMMARY OF THE INVENTION

The object of the present invention is to provide a device for determining quantum number of a image system in which the activity of discrete cosine transformation coefficient is calculated to calculate target bit, the length of the code for the discrete cosine transformation coefficient is obtained, and the quantizing number is determined by comparing the target bit and the length of the code to carry out the optimum quantization.

In order to achieve this object, the present invention comprises a discrete cosine transformation means for transforming the image data, a segment delay means for delaying the data inputted from the discrete cosine transformation means for prescribed time, a quantization means for quantizing inputted from the segment delay means, a variable decoding means for decoding the quantizied data by the quantization means, a formatter for arranging the data inputted from the variable decoding means in a suitable form to the system, an activity calculation means for calculating activity by counting the discrete cosine transformation coefficient transformed by the discrete cosine transformation means in macro block unit, a target bit calculation means for calculating the target bit of the data which is inputted from the activity calculation means in macro block unit, a code length calculation means for calculating the generated bit by quantizing and decoding variably the discrete cosine transformation coefficient of the discrete cosine transformation means, a comparison means for comparing the code length calculated by the code length calculation means and the target bit calculated by the target bit calculation means, and a quantizing number determination means for determining and outputting the quantizing number by calculating the data inputted from the comparison means.

The activity calculation means comprises a comparator for comparing the coefficient data of the discrete cosine transformation means with 2, a counter for counting the coefficient data more than 2, and an adder for adding coefficient of the counter in macro block unit.

The target bit calculation means comprises a multipliers for multiplying sum of the coeifficient of the activity calculation means by the segment target bit, an adder for adding output of the multiplier, and the dividers for dividing the output of the multipliers by sum of the segment of the adder to obtain the target bit for the macro block.

### BRIEF DESCRIPTION OF THE INVENTION

FIG. 1 is a view showing the traces control of the buffer during coding of the image data.

FIG. 2 is a quantizing number matrix for the block of coding type in the scene.

FIG. 3 is a view showing structure of the quantizing number determining device according to the present invention.

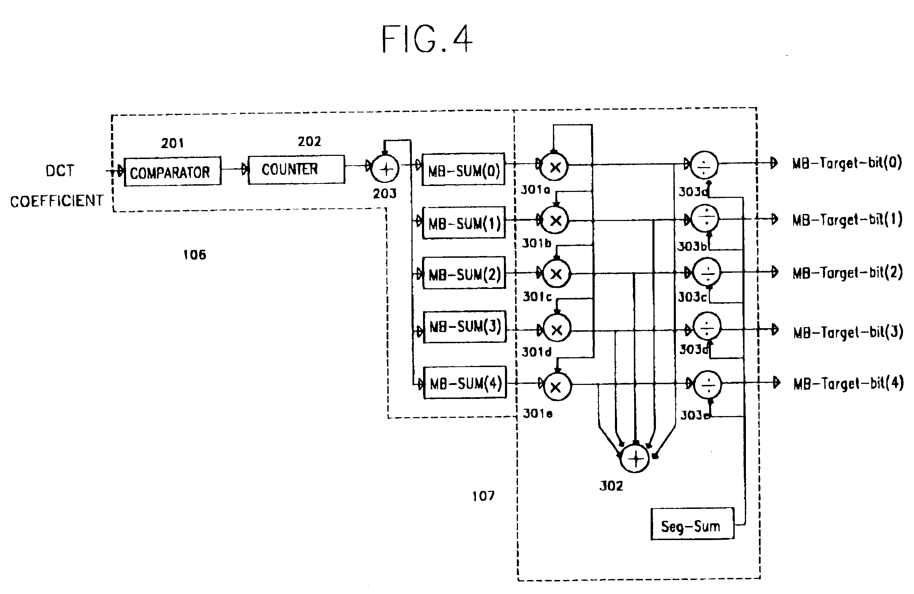

FIG. 4 is a view showing structure of the activity calculation unit and the target bit calculation unit of FIG. 3.

FIG. 5 is a view showing structure of the code length calculation unit of the FIG. 3.

FIG. 6 is a view showing calculating operation of the code length.

### DETAILED DESCRIPTION OF THE INVENTION

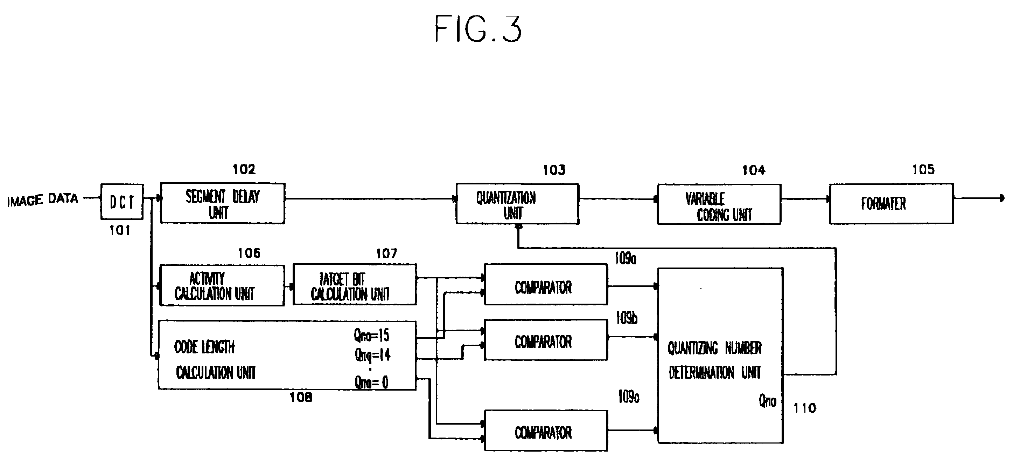

Referring to FIG. 3, the quantizing number determining device according to present invention comprises a DCT 101 for transforming the image data, a segment delay unit 102 for delaying the data inputted from the discrete cosine transformation unit 102 for prescribed time, a quantization unit 103 for quantizing the data inputted from the segment delay unit 102, a variable coding unit 104 for coding variably the data inputted the quantization unit 103, a formatter 105 for arranging the data inputted from the variable coding unit 104 in suitable form to the system, an activity calculation unit 106 for calculating the data inputted the DCT 101, a target bit calculation unit 107 for calculating the data inputted from the activity calculation unit 106 and outputting the target bit, a code length calculation unit 108 for calculating the data inputted from the DCT 101 and outputting the sum of the length of the 16 codes, comparators 109a-109o for comparing the sum of the code length inputted from the code length calculation unit 108 and the target bit inputted from the target bit calculation unit 107, and a quantizing number determination unit 110 for calculating the data inputted from the comparators 109a-109o to determine the quantizing number and outputting the determined quantizing number to the quantization unit 103.

The activity calculation unit 106 comprises a comparator 201 for comparing the coefficient of the DCT 101 with 2 to judge whether the coefficient is 0,1 or not, a counter 202 for counting the coefficient more than 2, and an adder 203 for adding the coefficient counted by the counter 202 to obtain the sum of the coefficient of the 5 macro block.

The target bit calculation unit 107 comprises multipliers 301a-301e for multiplying the sum of coefficient of the activity calculation unit 106 by the value of the segment target bit, 2680, an adder 302 for adding the value outputted from the multiplier 301a-301e to obtain the sum of the segment, and divides 303a-303e for dividing the value outputted from the multipliers 301a-303e by the sum of the segment of the adder 302 to obtain the target bit.

In the above mentioned quantizing number determination device, when the image data, analog signal, is inputted into the image system, it is converted into the digital data by the analog/digital converter(not shown) and then converted into the frequency dependent signal by the DCT 101. The transformed signal is inputted to the comparator 201 of the activity calculation unit 106, which judges whether the discrete cosine transformation coefficient is above two or not, and then the number of the discrete cosine transformation coefficient more than two is counted by the counter 202. The value counted by the counter 202 is added by the adder 203 to obtain the sum of the activity coefficient of the macro block unit, and then outputted to the target bit calculation unit 107.

In this case, the number of the discrete cosine transformation coefficient is a important factor of the complex degree of the scene. Since the small coefficient does not affect the complex degree of the scene, however, the activity calculation unit 106 ignores 2 lower bit of the coefficient. Thus, the output of the activity calculation unit 106 is multiplied by the value of the target bit for the 1 segment, 2680, to obtain the segment bit. The segment bit is added by the adder 302 and become the sum of the segment. Again, the segment bit is divided by the sum of the segment by the dividers 303a-303e to obtain the ratio for the sum of the segment, so that the target for five macro block is obtained.

The target bit for 1 segment and 1 macro blocks is$\text{1 seg-Target-bit = 1 syncronous block × 5 × 8 bit} \text{= 77 byte × 5 × 8 bit} \text{= 2680 bit}$ 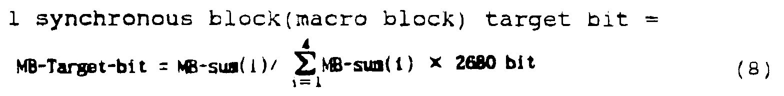 where, seg-Target-bit is the target for one segment and MB-Target-bit is the target for one macro block. In eq. (8), when the compressed image data is restored, the target bit is the optimum number of the bit for restoration of the scene quality of the five macro block equally.

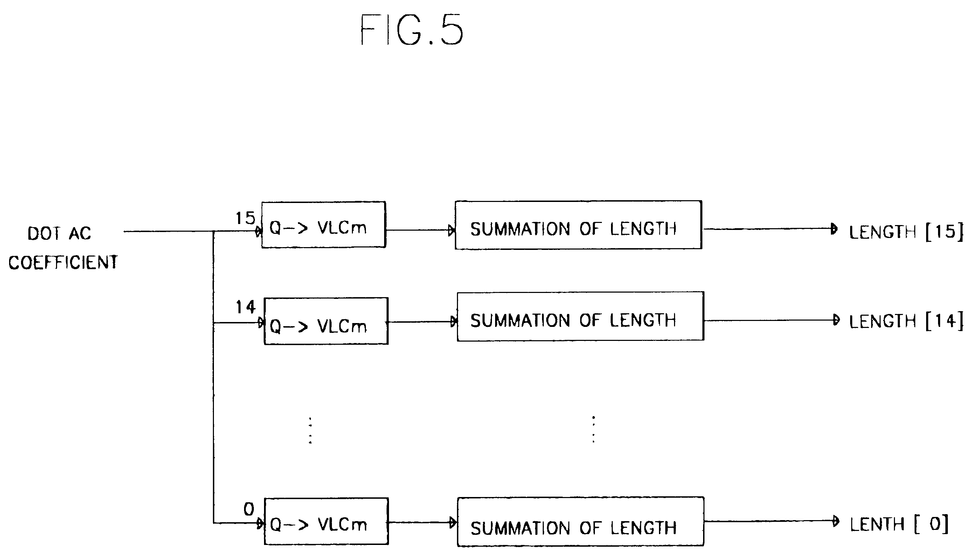

Further, when the number of the bit corresponding to the appropriate scene quality is estimated in the target bit calculation unit 107 by calculating the activity in the activity calculation unit 106, six transformation coefficient of the DCT 101 is quantizied and coded by the code length calculation unit 108 to obtain the practical code length as shown in FIG. 5. In the comparators 109a-109o, accordingly, the target bit for the macro block of the target bit calculation unit 107 is compared with the six code length obtained by the code length calculation unit 108. In the quantizing number determination unit 110, the value inputted from the comparators 109a-109o is calculated to judge the most close code length for the target bit, so that the judged value is outputted to the quantizing unit as a quantizing number.

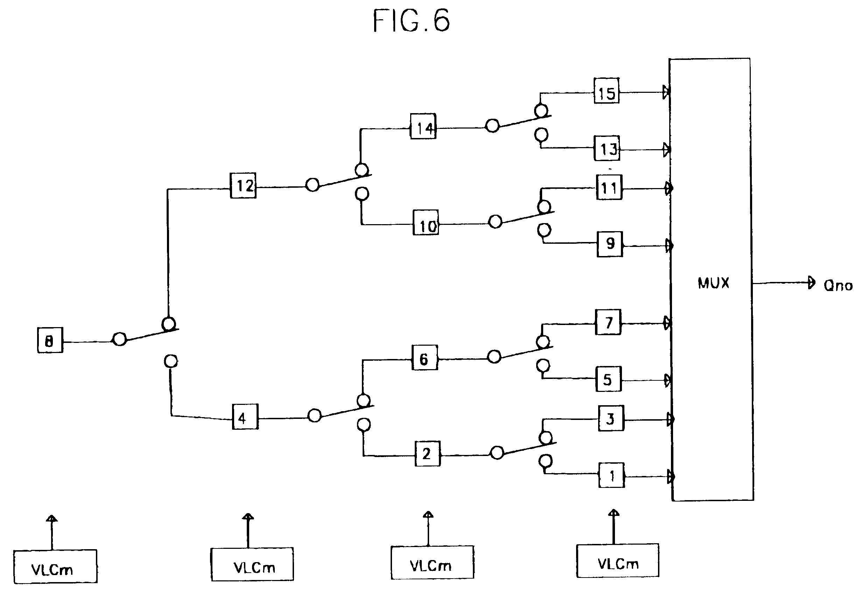

FIG. 6 is a view showing binary tree structure carrying out the quantization and variable coding process. In this figure, the complex degree of the hardware for determination of the quantizing number Qno is decreased. By comparing the practical number at the bit for the discrete cosine transformation coefficient with the target bit for the macro block, if the number of the bit is larger than the target bit, the upper tree path is carried out. On the contrary, if the number of the bit is smaller than the target bit, the lower tree path is carried out. In this case, since the multiplexer is used, only one variable coder is need for respective step.

While the number of the bit corresponding to appropriate the scene quality is estimated by the activity calculation unit 106 and the target bit calculation unit 107, the practical coding process for the discrete cosine transformation coefficient is carried out by the code length calculation unit 108, and the quantizing number is calculated by the comparator 109 and the quantizing number determination unit 110, the data inputted from the DCT 101 is delayed in the segment delay unit 102 and outputted to the quantization unit 103. In the quantization unit, the transformation coefficient of the DCT inputted through the segment delay unit 102 according to the quantizing number determination unit 110 is quantizied and converted into the reference quantity.

In the variable coding unit 104, the reference quantity of the quantization unit 103 is read from the low frequency region by zigzag scan, so that the data becomes run-length coding and then the bit stream data. The bit stream data is converted in the appropriate form to the system by the formatter 105 to compress the image data.

Although the activity is calculated by obtaining the number of the coefficient in the macro block unit, in the present invention, the activity can be obtained by obtaining the number of the coefficient directly.

In addition, when the code length for the discrete cosine transformation coefficient is calculated, the bit sum of eight can be obtained using only eight modules for quatization and the variable coding, so that the bit sum of six can be calculated.$\text{Q21 = (Q2i - Q2(i-1)) / 2 = Qi}$ After the bit sum is obtained using the six modules for quantization and variable coding, further, the bit sum of twelve can be calculated.$\begin{matrix}\begin{matrix}\begin{matrix}\text{Q3i - (Q3i - Q3(i-1)) / 3 = Q3i -1}\end{matrix} \\ \begin{matrix}\text{Q3i - {(Q3i - Q3(i-1)) / 3} × 2 = Q3i - 2}\end{matrix}\end{matrix}\end{matrix}$

In the aforementioned quantizing number determination device of the image signal, since the target bit is calculated in ratio of the activity, the data not to be used by the formatter algorithm is minimized and the quantization process is carried out efficiently. In addition, because the image data is recorded in recording space which is defined in certain size to distribute the scene quality equally by the efficient quantization process, the scene quality of the scene is improved.

Having described out invention as related to the embodiment shown in he accompanying drawing, it is our intention that the invention be not limited by any of the details of description, unless otherwise specified, but rather be construed broadly within its spirit and scope as set out in the accompanying claims.

## Claims

1. A device for determining quantizing number of image signal comprising:
a discrete cosine transformation means for transforming image data;
a segment delay means for delaying the data inputted from said discrete cosine transformation means for prescribed time;
a quantization means for quantizing said data inputted from said segment delay means;
a variable coding means for coding variably said data inputted from said quantization means;
a formatter for converting said data inputted from said variable coding means in appropriate form;
an activity calculation means for counting the number of discrete cosine transformation coefficient of said discrete cosine transformation means and calculating activity in a macro block unit;
a target bit calculation means for calculating target bit of said data inputted from said activity calculation means;
a code length calculation means for calculating practically generated bit, said code length calculation means quantizing and coding variably said discrete cosine transformation coefficient of said discrete cosine transformation means;
a plurality of comparison means for comparing the code length of said code length calculation means with said target bit of said target bit calculation means; and
a quantizing number determination means for determining quantizing number of said data inputted from said comparison means and outputting said quantizing number to said quantization means.

2. A device for determining quantizing number of image signal according to claim 1, wherein said data inputted from said segment delay means is converted into reference quantity by said quantization means.

3. A device for determining quantizing number of image signal according to claim 1, wherein said reference quantity is converted into bit stream data by said variable coding means.

4. A device for determining quantizing number of image signal according to claim 3, wherein said reference quantity is read from low frequency region by zigzag scan for run length coding by said variable coding means.

5. A device for determining quantizing number of image signal according to claim 1, wherein said activity calculation means comprises:
a comparator for comparing said discrete cosine transformation coefficient of said discrete cosine transformation means with prescribed value;
a counter for counting the number of said discrete cosine transformation coefficient; and
a plurality of adder for adding the transformation coefficient counted by said counter.

6. A device for determining quantizing number of image signal according to claim 5, wherein the sum of said transformation coefficient is macro block unit of 5.

7. A device for determining quantizing number of image signal according to claim 5, wherein said prescribed value is 2.

8. A device for determining quantizing number of image signal according to claim 5, wherein said counter counts said discrete cosine transformation coefficient different to 0.

9. A device for determining quantizing number of image signal according to claim 5, wherein said counter counts said discrete cosine transformation coefficient different to 0 and 1.

10. A device for determining quantizing number of image signal according to claim 5, wherein said counter counts said discrete cosine transformation coefficient different to 0, 1, and 2.

11. A device for determining quantizing number of image signal according to claim 1, wherein said target bit calculation means comprises:
a plurality of multiplier for multiplying said sum of said coefficient inputted from said activity calculation means by segment target bit;
an adder for adding output from the multipliers, respectively; and
a plurality of divider for dividing output from said multipliers by sum of segment outputted from said adder.

12. A device for determining quantizing number of image signal according to claim 11, wherein said segment target bit satisfies follow relation.$\text{1 seg-Target-bit = 1 syncronous block × 5 × 8 bit} \text{= 77 byte × 5 × 8 bit = 2680 bit}$ where, seg-Target-bit is segment target bit.
